# EUROPEAN PATENT SPECIFICATION

(11) **EP 3 826 516 B1**
(45) Date of publication and mention of the grant of the patent: **09.03.2022**
(21) Application number: 19737676.7
(22) Date of filing: 28.06.2019
(51) Int. Cl.: A47J 31/18, A47J 31/58, A47J 31/52, A47J 27/62

(54) **A METHOD FOR SOLVING THE PROBLEM OF SMUDGING IN THE OVERFLOW DETECTION IN A COMMERCIAL TURKISH COFFEE MACHINE**
VERFAHREN ZUR LÖSUNG DES PROBLEMS DES VERSCHMIERENS DURCH ÜBERLAUFERKENNUNG IN EINER KOMMERZIELLEN TÜRKISCHEN KAFFEEMASCHINE
PROCÉDÉ PERMETTANT DE RÉSOUDRE LE PROBLÈME DE SALISSURE PAR DÉTECTION DE DÉBORDEMENT DANS UNE MACHINE À CAFÉ TURC DU COMMERCE

(30) Priority: 23.07.2018 TR 201810475
(43) Date of publication of application: 02.06.2021
(73) Proprietor: Arçelik Anonim Sirketi, 34445 Istanbul (TR)
(72) Inventor: OZDEMIR, Musa, 34950 ISTANBUL (TR); KANTAS, Murat, 34950 ISTANBUL (TR); KANDEMIR, Nihat, 34950 ISTANBUL (TR); KARTAL, Fatih, 34950 ISTANBUL (TR)
(86) International application number: PCT/EP2019/067369
(87) International publication number: WO 2020/020572

(56) References cited:
- WO-A1-2007/013013
- WO-A1-2017/082841
- CN-U- 202 858 803

## Description

The present invention relates to a coffee machine and a method for resolving detection errors occurring due to smudge on probes of a conductivity sensor, in coffee overflow detection by conductivity sensor in commercial Turkish coffee machines.

Overflow detection in commercial Turkish coffee machines differs with respect to current Turkish coffee machines. Current Turkish coffee machines are designed for domestic users whereas commercial Turkish coffee machines which are currently in the process of being designed, appeal to cafes, hotels and similar venues. Therefore, their successive cooking scenarios are much more likely compared to present "Telve" machines.

The steam thermostat component used for overflow detection in current Turkish coffee machines is not a very suitable component for successive cooking operations. Furthermore, in current Turkish coffee machines, the steam thermostat may activate early in successive usage due to thermal load, halting operation before cooking begins. Therefore, overflow is detected by a different method, i.e. by measuring conductivity in commercial Turkish coffee machines. However, the probes used in said conductivity measurement method become smudged over time which consequently affects measured conductivity values, leading to failure of overflow detection from such probes in time.

In the state of the art, international patent application no. WO2007013013 A1 discloses a coffee machine for preparing Turkish coffee, wherein overflow of coffee is prevented by measuring conductivity of liquid in the coffee pot.

The aim of the present invention is to develop a coffee machine and a method to resolve the problem in coffee overflow detection occurring due to smudging of the probes used in a conductivity sensor used for overflow detection in commercial Turkish coffee machines. Thus, problems such as dirty appearance, cleaning difficulties, humidity and smudgeinduced machine breakdowns, caused by overflowing of coffee may be averted and maintenance and break down ratios may be reduced.

The method and the coffee machine realized in order to attain the aim of the invention is defined respectively in claims 1 and 4.

The method of the invention can be executed in a coffee machine comprising a main body, a cooking chamber for placing a cooking container used for cooking coffee therein, a heater for heating the cooking container, a conductivity sensor having two probes for detecting whether coffee has overflown, a control unit adapted to process the data from the conductivity sensor, a user interface for receiving user commands and an audible and/or visual alert unit.

In its most basic form, the method of the invention comprises the steps of querying whether user command is received to start the cooking process; if user command is received, starting to measure conductivity value between two probes by the conductivity sensor and transmitting measured values to the control unit to be read; saving by the control unit the read first conductivity value as the reference value; comparing each read conductivity value with the reference value stored by the control unit and querying whether the difference between these two values is lower than a predetermined threshold value; continuing the cooking process if said difference is lower than the threshold value, and terminating the cooking process if otherwise. The method further comprises, when the coffee machine is in idle standby mode before the next cooking process, measuring the conductivity value between two probes again by the conductivity sensor and transmitting the measured value to the control unit; reading said measurement value and comparing said read measurement value with a predetermined limit value by the control unit, and; if said read measurement value is higher than the limit value, alerting by the control unit for cleaning of the probes via the audible and/or visual alert unit.

The coffee machine comprises a main body, a cooking chamber for placing a cooking container used for cooking coffee therein, a heater for heating the cooking container, a conductivity sensor for detecting whether coffee has overflown, a control unit adapted to process the data from the conductivity sensor, a user interface for receiving user commands and an audible and/or visual alert unit.

In another embodiment of the invention, the cooking chamber is large enough to place a plurality of cooking containers, and a plurality of conductivity sensors are used to detect whether there is coffee overflow during cooking coffee in each one of the cooking containers.

To cook Turkish coffee in the coffee machine, first, required materials, for example Turkish coffee, water and preferably sugar is added into the cooking container which is then placed into the cooking chamber. Then, according to user commands received via the user interface (an interface consisting of for example, a button, a keyboard, a touch-screen, or a combination thereof), the control unit activates a heater provided on the base of the cooking chamber, starting to heat the cooking container disposed on the heater. A method proposed to detect overflowing of coffee during the cooking process, is disclosed hereinafter.

In the first step of the invention, the control unit queries whether user command is received to start the cooking process. If the user has started the cooking process, the conductivity sensor starts to measure the conductivity value between two probes and transmits the measured values to the control unit. The control unit determines and saves the first measured conductivity value as the reference value (S_{ref}).

The control unit continues reading measurement values from the conductivity sensor during cooking. The control unit compares each read conductivity value (S_{read}) with the reference value (S_{ref}) and determines the difference between these two values. The control unit queries whether the difference between these two values is lower than a threshold value (S_{threshold}) predetermined according to design requirements. If said difference is lower than the threshold value (S_{threshold}), the control unit determines that the coffee being cooked has not overflown and continues the cooking process. If said difference does not exceed the threshold value (S_{threshold}) during cooking of coffee, the control unit completes the cooking process in a normal cooking duration. If said difference is higher than the threshold value (S_{threshold}), the control unit detects overflowing, terminates the cooking process and alerts the user via the audible and/or visual alert unit.

The effect of smudged probes on a conductivity sensor measured in tests conducted on a prototype machine comprising a conductivity sensor. In this test, trials are conducted by cooking coffee in given intervals for 22 times, coffee is overflown in these trials and probes have become smudged due to overflowing.

The conductivity value between the probes have decreased further due to smudging of the probes each time when there is no overflow as the probes have become smudged.

Depending the amount of smudging, major variations in the limit value (Sₗᵢₘᵢₜ) also affects the threshold value (S_{threshold}), in other terms, the sensor becomes impaired, failing to respond the moment of overflow. Therefore, as explained in the following paragraph, this limit value (Sₗᵢₘᵢₜ) is checked before each consecutive cooking operation, examining whether said value is within the allowed range. Then, a reference value (S_{ref}) is determined again during cooking, and overflowing is decided according to a determined threshold value (S_{threshold}) by measuring the difference in sensor data throughout cooking. Said steps are explained in detail hereinafter.

In the next step of the method of the invention, the cooking process is terminated at completion of normal coffee cooking duration or if said difference is higher than the threshold value (S_{threshold}), and in the step of idle standby until the next cooking process, the conductivity sensor measures the conductivity value between two probes and transmits it to the control unit. The control unit reads this measurement value (S_{read}) and compares it with a limit value (Sₗᵢₘᵢₜ). Said limit value (Sₗᵢₘᵢₜ) is a conductivity value representative of the uncalibratable dirtiness level. In this comparison, the control unit queries whether said read measurement value (S_{read}) is lower than the limit value (Sₗᵢₘᵢₜ). If said read measurement value (S_{read}) is higher than the limit value (Sₗᵢₘᵢₜ), the control unit alerts via the visual and/or audible alert unit for cleaning of the probes and hinders a subsequent cooking process. If said read measurement value (S_{read}) is lower than the limit value (Sₗᵢₘᵢₜ), the calibration process explained in the previous steps is conducted, enabling problem-free coffee overflow detection despite smudging of the probes and consequent conductivity variation.

## Claims

1. A method suitable to be executed in a coffee machine comprising a main body, a cooking chamber for placing a cooking container used for cooking coffee therein, a heater for heating the cooking container, a conductivity sensor having two probes for detecting whether coffee has overflown, a control unit adapted to process the data from the conductivity sensor, a user interface for receiving user commands and an audible and/or visual alert unit, and **comprising** the steps of:
- querying whether user command is received to start the cooking process,
- if user command is received, starting to measure conductivity value between two probes by the conductivity sensor and transmitting measured values to the control unit to be read,
- saving by the control unit the read first conductivity value as the reference value (Sref),
- comparing each read conductivity value (S_{read}) with the reference value (S_{ref}) stored by the control unit and querying whether the difference between these two values is lower than a predetermined threshold value (S_{threshold}),
- continuing the cooking process if said difference is lower than the threshold value (S_{threshold}), and terminating the cooking process if otherwise,
**characterized by** the steps of, when the coffee machine is in idle standby before the next cooking process,
- measuring the conductivity value between two probes again by the conductivity sensor and transmitting the measured value to the control unit,
- reading said measurement value and comparing said read measurement value (S_{read}) with a predetermined limit value (Sₗᵢₘᵢₜ) by the control unit, and
- if said read measurement value (S_{read}) is higher than the limit value (Sₗᵢₘᵢₜ), alerting by the control unit for cleaning of the probes via the visual and/or audible alert unit.

2. A method according to claim 1, **characterized by** the step of alerting the user via the audible and/or visual alert unit after the step of "terminating the cooking process if said difference is higher than the threshold value (S_{threshold})."

3. A method according to claim 1 or 2, **characterized by** the step of hindering by the control unit the subsequent cooking process after the step of "if said read measurement value (S_{read}) is higher than the limit value (Sₗᵢₘᵢₜ), alerting by the control unit for cleaning of the probes via the visual and/or audible alert unit.

4. A coffee machine **comprising** a main body, a cooking chamber for placing a cooking container used for cooking coffee therein, a heater for heating the cooking container, a conductivity sensor having two probes for detecting whether coffee has overflown, a control unit adapted to process the data from the conductivity sensor, a user interface for receiving user commands and an audible and/or visual alert unit, wherein the control unit is configured to:
- query whether user command is received to start the cooking process,
- if user command is received, start to measure conductivity value between two probes by the conductivity sensor and receive and read the measured values,
- save the read first conductivity value as the reference value (S_{ref}),
- compare each read conductivity value (S_{read}) with the saved reference value (S_{ref}) and query whether the difference between these two values is lower than a predetermined threshold value (S_{threshold}),
- continue the cooking process if said difference is lower than the threshold value (S_{threshold}), and terminate the cooking process otherwise,
**characterized in that** the control unit is further configured to, when the coffee machine is in idle standby before the next cooking process,
- measure the conductivity value between two probes again by the conductivity sensor and receive the measured value,
- read said measurement value and compare said read measurement value (S_{read}) with a predetermined limit value (Sₗᵢₘᵢₜ), and
- if said read measurement value (S_{read}) is higher than the limit value (Sₗᵢₘᵢₜ), alerting the user for cleaning of the probes, via the visual and/or audible alert unit.

## Patentansprüche

1. Ein Verfahren, das geeignet ist um in einer Kaffeemaschine ausgeführt zu werden, umfasst einen Hauptkörper, eine Kochkammer zum Platzieren eines Kochbehälters, der zum Kochen von Kaffee darin verwendet wird, eine Heizung zum Erwärmen des Kochbehälters, einen Leitfähigkeitssensor mit zwei Sonden zur Erkennung, ob Kaffee übergelaufen ist, eine Steuereinheit, die so angepasst ist, dass sie die Daten von dem Leitfähigkeitssensor verarbeitet, eine Benutzerschnittstelle zum Empfangen von Benutzerbefehlen sowie eine akustische und/oder visuelle Alarmeinheit und umfasst die Schritte:
- Abfragen, ob ein Benutzerbefehl zum Starten des Kochvorgangs empfangen wird,
- wenn ein Benutzerbefehl empfangen wird, Beginn der Messung des Leitfähigkeitswerts zwischen zwei Sonden durch den Leitfähigkeitssensor und Übertragung der gemessenen Werte an die Steuereinheit zum Ablesen,
- Abspeichern des ausgelesenen ersten Leitfähigkeitswertes durch die Steuereinheit als Referenzwert (Sref),
- Vergleichen jedes gelesenen Leitfähigkeitswertes (Sread) mit dem von der Steuereinheit gespeicherten Referenzwert (Sref) und Abfragen, ob die Differenz dieser beiden Werte kleiner als ein vorgegebener Schwellwert (Sthreshold) ist,
- Fortsetzen des Kochvorgangs, wenn die Differenz kleiner als der Schwellwert (Schwellenwert) ist, und andernfalls das Beenden des Kochvorgangs
**Gekennzeichnet sind die Schritte durch,** dass sich die Kaffeemaschine vor dem nächsten Kochvorgang im Ruhezustand befindet,
- bei erneuter Messung des Leitfähigkeitswertes zwischen zwei Sonden durch den Leitfähigkeitssensor und Übermittlung des Messwertes an die Steuereinheit,
- Lesen des Messwerts und Vergleichen des gelesenen Messwerts (Sread) mit einem vorbestimmten Grenzwert (Slimit) durch die Steuereinheit, und
- wenn der abgelesene Messwert (Sread) größer als der Grenzwert (Slimit) ist, Alarmieren der Steuereinheit zur Reinigung der Sonden über die optische und/oder akustische Alarmeinheit.

2. Ein Verfahren, wie in Anspruch 1 aufgeführt, **ist dadurch gekennzeichnet, dass** der Schritt des Alarmierens des Benutzers über die akustische und/oder visuelle Alarmeinheit nach dem Schritt "Beenden des Kochvorgangs, wenn die Differenz höher als der Schwellenwert (Schwellenwert) ist".

3. Ein Verfahren, wie in Anspruch 1 oder 2 aufgeführt, **ist dadurch gekennzeichnet, dass** der Schritt des Verhinderns des nachfolgenden Garvorgangs durch die Steuereinheit nach dem Schritt "wenn der gelesene Messwert (S_{read}) höher als der Grenzwert (Sₗᵢₘᵢₜ) ist, alarmiert durch die Steuereinheit zur Reinigung der Sonden über die optische und/oder akustische Alarmeinheit.

4. Eine Kaffeemaschine umfasst einen Hauptkörper, eine Kochkammer zum Platzieren eines Kochbehälters, der zum Kochen von Kaffee darin verwendet wird, eine Heizung zum Erwärmen des Kochbehälters, einen Leitfähigkeitssensor mit zwei Sonden zur Erkennung, ob Kaffee übergelaufen ist, eine Steuereinheit, die so angepasst ist, dass sie die Daten von dem Leitfähigkeitssensor verarbeitet, eine Benutzerschnittstelle zum Empfangen von Benutzerbefehlen sowie eine akustische und/oder visuelle Alarmeinheit, , wobei die Steuereinheit konfiguriert ist:
- Abzufragen, ob ein Benutzerbefehl zum Starten des Kochvorgangs empfangen wird,
- wenn ein Benutzerbefehl empfangen wird, Beginn der Messung des Leitfähigkeitswerts zwischen zwei Sonden durch den Leitfähigkeitssensor und Übertragung der gemessenen Werte an die Steuereinheit zum Ablesen,
- Abspeichern des ausgelesenen ersten Leitfähigkeitswertes durch die Steuereinheit als Referenzwert (Sref),
- Vergleichen jedes gelesenen Leitfähigkeitswertes (S_{read}) mit dem von der Steuereinheit gespeicherten Referenzwert (S_{ref}) und Abfragen, ob die Differenz dieser beiden Werte kleiner als ein vorgegebener Schwellwert (S_{threshold}) ist,
- Fortsetzen des Kochvorgangs, wenn die Differenz kleiner als der Schwellwert (Schwellenwert) ist, und andernfalls das Beenden des Kochvorgangs
**Gekennzeichnet ist das Verfahren dadurch,** dass die Steuereinheit darüber hinaus so konfiguriert ist, wenn sich die Kaffeemaschine vor dem nächsten Kochvorgang im Leerlauf befindet, das sie
- den Leitfähigkeitswert zwischen zwei Sonden erneut mit dem Leitfähigkeitssensor misst und den Messwert erhält,
- sie den Messwert ausliest und den ausgelesenen Messwert (S_{read}) mit einem vorgegebenen Grenzwert (Sₗᵢₘᵢₜ) vergleicht, und
- wenn der gelesene Messwert (S_{read}) höher als der Grenzwert (Sₗᵢₘᵢₜ) ist, sie den Benutzer über die visuelle und/oder akustische Alarmeinheit auf eine Reinigung der Sonden alarmiert.

## Revendications

1. Un procédé pertinent pour s'exécuter dans une machine à café comprenant un corps principal, une chambre de cuisson dans laquelle se place un récipient de cuisson utilisé pour cuire le café à l'intérieur, un élément chauffant pour chauffer le récipient de cuisson, un capteur de conductivité ayant deux sondes pour détecter si le café a débordé, une unité de contrôle appropriée pour traiter les données du capteur de conductivité, une interface utilisateur pour recevoir les commandes de l'usager et une unité d'alerte sonore et/ou visuelle, et **comportant** les étapes consistant à :
- interroger si une commande de la part de l'usager est reçue pour démarrer le processus de cuisson,
- si une commande de la part de l'usager est reçue, commencer à mesurer la valeur de conductivité entre les deux sondes à travers le capteur de conductivité et transmettre les valeurs mesurées à l'unité de contrôle pour lecture,
- enregistrer sur l'unité de contrôle la première valeur de conductivité lue en tant que valeur de référence (Sref),
- comparer chaque valeur de conductivité lue (S_{read}) avec la valeur de référence (S_{ref}) mémorisée par l'unité de contrôle et interroger si la différence entre ces deux valeurs est inférieure à une valeur de seuil prédéterminée (S_{threshold}) ,
- poursuivre le processus de cuisson si ladite différence est inférieure à la valeur de seuil (S_{threshold}), et arrêter le processus de cuisson dans le cas contraire,
**caractérisé par,** lorsque la machine à café est en veille inactive avant le processus de cuisson suivant, les étapes consistant à :
- mesurer à nouveau la valeur de conductivité entre les deux sondes à travers le capteur de conductivité et transmettre la valeur mesurée à l'unité de contrôle,
- lire ladite valeur de mesure et comparer ladite valeur de mesure lue (S_{read}) avec une valeur limite prédéterminée (Sₗᵢₘᵢₜ) par l'unité de contrôle, et
- si ladite valeur de mesure lue (S_{read}) est supérieure à la valeur limite (Sₗᵢₘᵢₜ), avertir par l'unité de contrôle à travers l'unité d'alerte visuelle et/ou sonore pour le nettoyage des sondes.

2. Un procédé selon la revendication 1, **caractérisé par** l'étape d'avertissement de l'usager à travers l'unité d'alerte sonore et/ou visuelle suite à l'étape « arrêter le processus de cuisson si ladite différence est supérieure à la valeur de seuil (S_{threshold}). »

3. Un procédé selon la revendication 1 ou 2, **caractérisé par** l'étape de blocage du processus de cuisson ultérieur par l'unité de contrôle suite à l'étape « si ladite valeur de mesure lue (S_{read}) est supérieure à la valeur limite (Sₗᵢₘᵢₜ), avertir par l'unité de contrôle à travers l'unité d'alerte visuelle et/ou sonore pour le nettoyage des sondes.

4. Une machine à café **comprenant** un corps principal, une chambre de cuisson dans laquelle se place un récipient de cuisson utilisé pour cuire le café à l'intérieur, un élément chauffant pour chauffer le récipient de cuisson, un capteur de conductivité ayant deux sondes pour détecter si le café a débordé, une unité de contrôle appropriée pour traiter les données du capteur de conductivité, une interface utilisateur pour recevoir les commandes de l'usager et une unité d'alerte sonore et/ou visuelle, dans laquelle l'unité de contrôle est configurée pour :
- interroger si une commande de la part de l'usager est reçue pour démarrer le processus de cuisson,
- si une commande de la part de l'usager est reçue, commencer à mesurer la valeur de conductivité entre les deux sondes à travers le capteur de conductivité et recevoir et lire les valeurs mesurées,
- enregistrer la première valeur de conductivité lue en tant que valeur de référence (Sref),
- comparer chaque valeur de conductivité lue (S_{read}) avec la valeur de référence enregistrée (S_{ref}) et interroger si la différence entre ces deux valeurs est inférieure à une valeur de seuil prédéterminée (S_{threshold}),
- poursuivre le processus de cuisson si ladite différence est inférieure à la valeur de seuil (S_{threshold}), et arrêter le processus de cuisson dans le cas contraire,
**caractérisée en ce que** l'unité de commande, lorsque la machine à café est en veille inactive avant le processus de cuisson suivant, est également configurée pour,
- mesurer à nouveau la valeur de conductivité entre les deux sondes à travers le capteur de conductivité et recevoir la valeur mesurée,
- lire ladite valeur de mesure et comparer ladite valeur de mesure lue (S_{read}) avec une valeur limite prédéterminée (Sₗᵢₘᵢₜ), et
- si ladite valeur de mesure lue (S_{read}) est supérieure à la valeur limite (Sₗᵢₘᵢₜ), avertir l'usager pour le nettoyage des sondes, à travers l'unité d'alerte visuelle et/ou sonore.
